# EUROPEAN PATENT SPECIFICATION

(11) **EP 3 309 919 B1**
(45) Date of publication and mention of the grant of the patent: **04.10.2023**
(21) Application number: 17195892.9
(22) Date of filing: 11.10.2017
(51) Int. Cl.: H02H 7/26, H04J 3/06, H02H 1/00

(54) **SYSTEMS AND METHODS FOR SYNCHRONIZING TIME SOURCES WITHIN A PROTECTION ZONE OF A DIGITAL POWER SUBSTATION**
SYSTEME UND VERFAHREN ZUR SYNCHRONISIERUNG VON ZEITQUELLEN IN EINER SCHUTZZONE EINES DIGITALEN UMSPANNWERKS
SYSTÈMES ET PROCÉDÉS POUR SYNCHRONISER DES SOURCES TEMPORELLES DANS UNE ZONE DE PROTECTION D'UNE SOUS-STATION DE PUISSANCE NUMÉRIQUE

(30) Priority: 14.10.2016 US 201615293396
(43) Date of publication of application: 18.04.2018
(73) Proprietor: General Electric Technology GmbH, 5400 Baden (CH)
(72) Inventor: HAMOUR, Ihab, 5400 Baden (CH); KANABAR, Mitalkumar G., 5400 Baden (CH)
(74) Representative: Openshaw & Co.

(56) References cited:
- WO-A2-01/95550
- US-A1- 2011 135 047
- US-A1- 2014 111 249

## Description

### TECHNICAL FIELD

The present disclosure generally relates to synchronizing time sources for a digital substation. More particularly, the present disclosure relates to synchronizing time sources when a global master time source has a degraded time quality or is otherwise unavailable.

### BACKGROUND

A typical power distribution grid includes a power plant, a transmission substation, high voltage transmission lines, and a power substation. The power substation includes primary equipment (e.g., transformers, lines/feeders, circuit breakers, disconnect switches, distribution busses) that is located in a switchyard and secondary equipment (e.g. protection and control intelligent electronic devices (IEDs)) located in a control house, separate from the switchyard. In a conventional power substation, these protection and control IEDs are installed per primary equipment also known as protection zones (e.g. transformer protection zone IEDs, transmission line IEDs, bus IEDs, etc.).

In a digital substation, process units or merging units are installed in close proximity to the primary equipment to measure and digitize any communication interface with IEDs within a protection zone exchanging sampled value data streams as well as control or event messages.

A common mode to exchange digitized information within a digital substation is through synchronization of time clock signals of devices (e.g., IEDs and process units) within the substation. In conventional substations, a global master (e.g., grandmaster clock) is a time source to which all devices within the substation are synchronized using a protocol. However, synchronization to the global master may reduce reliability and/or availability of local protection systems (e.g., systems in the same physical location).

The global master and all devices with a time source within the substation include a time quality that should be of a predetermined threshold to prevent failure. Where time quality is lower than the predetermined threshold, failure within the substation can occur.

Accordingly, there is a need to determine the presence of time source failures and synchronize all devices within a substation to time source when the global master fails.

WO 01/95550 A2 discloses an integrated network element and time server for distribution of time information in a computer network. US 2014/0111249 A1 discloses systems and methods for detecting the failure of a precision time source using an independent time source. The system may be further configured to detect the failure of a GNSS based precision time source based on a calculated location of a GNSS receiver. Moreover, the system may be further configured to distribute a time derived from the precision time source as a precision time reference to time dependent devices. In the event of a failure of the precision time source, the system may be configured to distribute a time derived from a second precision time source as the precision time signal during a holdover period.

### SUMMARY

The invention is defined by the appended claims. Claim 1 defines a system for synchronizing time sources within a protection zone of a digital power substation and claim 8 defines a method for synchronizing time sources within a protection zone of a digital power substation. In the following, apparatus and/or methods referred to as embodiments that nevertheless do not fall within the scope of the claims should be understood as examples useful for understanding the invention.

The embodiments featured herein help solve or mitigate the above-noted issues as well as other issues known in the art. Specifically, the present technology allows devices in a local protection zone of a digital substation to synchronize with a device within the local protection system when a global time source is unavailable. The present technology also recognizes when the global time source once again becomes available.

The features, modes of operations, advantages, and other aspects of various embodiments are described below with reference to the accompanying drawings. It is noted that the present disclosure is not limited to the specific embodiments described herein. These embodiments are presented for illustrative purposes only. Additional embodiments, or modifications of the embodiments disclosed, will be readily apparent to persons skilled in the relevant art(s) based on the teachings provided.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
FIG. 1 is an illustration of a digital time synchronized system in which embodiments of the invention may be practiced.
FIG. 2 is an exemplary processor as utilized within the system of FIG. 1.
FIG. 3 is a flow chart illustrating an exemplary sequence for selecting a protection zone (local) master clock as executed by the controller of FIG. 2.
FIG. 4 is a flow chart illustrating an exemplary sequence for changing from a first clock master to a second clock master as executed by the controller of FIG. 2.
FIG. 5 is a flow chart illustrating an exemplary sequence for updating of a clock priority table as executed by the controller of FIG. 2.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

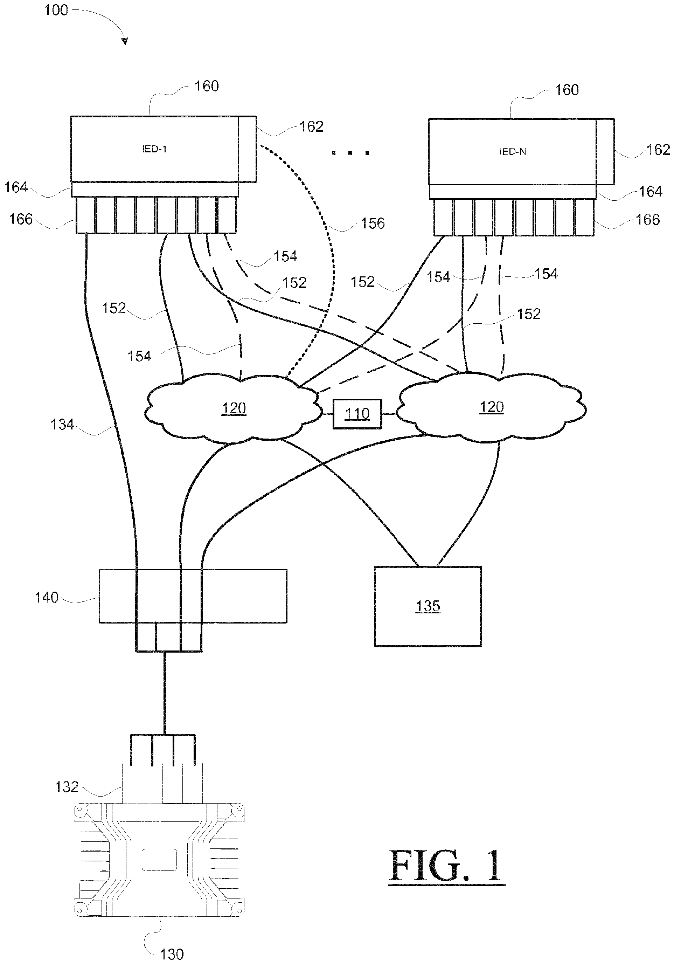

Figure 1 is an illustration of a time synchronizing system 100 for synchronizing time sources for a digital substation. The time synchronizing system 100 includes a grandmaster clock 110, one or more process communication networks 120, one or more module process units 130 (hereinafter referred to as a process unit), and one or more intelligent electronic devices (IEDs) 160 within a designated protection zone.

The grandmaster clock 110 is a precision clock that supports Precision Time Protocol (PTP) and delivers time and frequency synchronization to the process communication network 120. The grandmaster clock 110 provides a source of synchronization for PTP clients (e.g., PTP slaves) and communicates a precision time (e.g., current time of day) to the process communication networks 120.

Data packets including the precision time and time quality are communicated to the IED 160 and the process unit(s) 130 to allow time synchronization of the clocks within these devices. The data packets are communicated at a predetermined frequency (e.g., nanosecond). Additionally, each precision time communicated includes a time quality. For example the precision time can be 12:00:00 + 0.5 nanoseconds. The precision time and frequency can be regulated according to a recognized standard such as but not limited to IEEE 1588 and Inter-Range Instrumentation Group (IRIG) time code standards (e.g., IRIG-B).

The process communication network 120 is suited to connect devices within a specific area (e.g., within a digital substation), thus allowing for synchronization of clocks within the devices. For example, each of the process communication network 120 can be a local area network (LAN), a metropolitan area network (MAN), or a wide area network (WAN). The network 120 communicates data from the grandmaster clock 110 to the process unit 130 and the IED 160 across the designated protection zone and other protection zones in the digital substation.

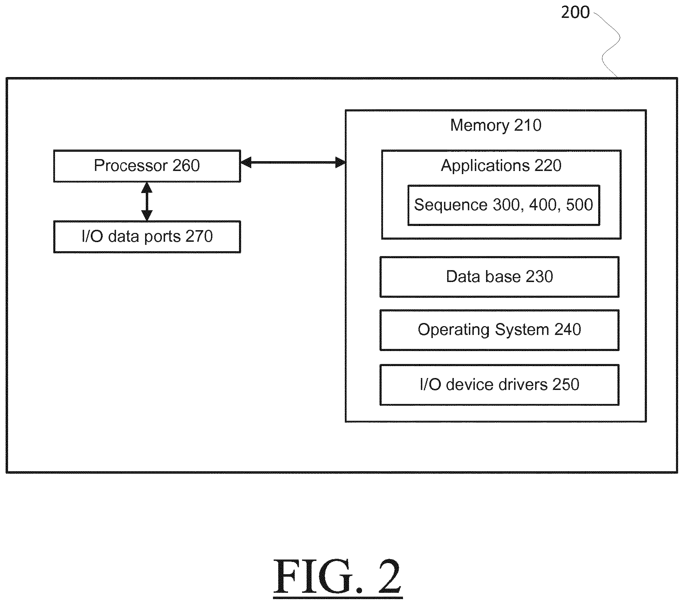

The networks 120 access one or more controllers 200, positioned within or remote from the network 120. The controllers 200 are cable of executing instructions associated with selecting a device (e.g., the grandmaster clock 110) with which to synchronize other devices in physical proximity of one another (e.g., process unit(s) 130 and IEDs 160). Further details of the controller 200 is described in association with FIG. 2.

The process unit 130, is an input/output device that receives analog and binary signals from primary equipment (e.g., transformers). The process unit 130 is in connection with the network 120 by way of a patch panel 140. The process unit 130 is also connected to the IEDs 160 via connection 134.

The process unit 130 includes a plurality of process unit communications (bCom) ports 132 through which inputs (e.g., analog and binary signals from the primary equipment), are received and through which outputs (e.g., binary commands (e.g., trip command and reclose command) are communicated to the primary equipment. In operation, the process unit 130 converts data from binary and/or analog signals into a digital signal and transmits the digital signal to the IED 160 using clock signals provided by each IED 160 to the connected process unit 130.

In some embodiments, the process unit 130 is a generic device 135 with basic input and output functions to receive and process data. The generic device 135 may replace the process unit 130 where minimum functionality (e.g., simile input/output ports or data processing) are needed.

The IEDs 160 are a controllers and/or processors used in the designated protection zone of particular equipment such as, a power transformer zone for example. The IEDs 160 may function a programmable logic controller, substation local area network node, and/or an IED gateway. In some embodiments, the IEDs 160 communicate using the Supervisory Control and Data Acquisition (SCADA) protocol.

The IEDs 160 receives data from the grandmaster clock 110 by way of the network 120 and issue control commands to the process unit 130. The IED 160 also includes settings to identify parameters with which to choose a master, as discussed in association with FIG. 2.

Each IED 160 (i.e., IED-1 through IED-N includes a central processing unit (CPU) 162 for receipt of the precision time, by way of a connection 156 (represented as a dotted line). The precision time is communicated using a station bus configured according to the Precision Time Protocol (e.g., IEEE 1588 PTP ver. 2).

Each IED 160 also includes a processor 164 and one or more process card communications ports (pCom ports) 166 for connection of a process card of the IED 160 the network 120. At least one pCom port 166 configured to receive a signal via a first connection 152 (represented as a solid line) from the network, and at least one pCom port 166 is configured to send a signal via a second connection 154 (represented as a dashed line). The pCom ports 166 are digital protection relay ports that can serve as a temporary protection zone (local) master clock to the process unit(s) 130, the generic device(s) 135, and any remaining (non-designated) IEDs 160 within the same physical location or protection zone until the grandmaster clock 110 becomes available and/or has a regained a predetermined time quality.

The first connection 152 enables the IED 160 to receive data from the grandmaster clock 110 via the network 120. In normal operation, the IED 160, process unit 130, and generic device 135 receive pulses from the grandmaster clock 110. However, when the grandmaster clock 110 has a degraded time quality or is otherwise unavailable (e.g., loss of power), data may not be received by the devices. The first connection 152 allows a designated IED 160 to serve as a protection zone master clock to the process unit(s) 130, the generic device(s) 135, and the non-designated IEDs 160 within the designated protection zone. It is contemplated that each protection zone in a digital substation includes at least one IED to serve as a protection zone master in where the grandmaster clock has degraded time quality or is otherwise unavailable.

The second connection 154 allows the designated IED 160 to serve as the protection zone master clock by sending pulses to the process unit 130, generic device 135, and/or non-designated IEDs 160 that synchronize clocks within these devices with the precision time provided by the designated IED 160. For example, where the IED-1 is designated to serve as the protection zone master clock, IED-2 through IED-N will receive precision time from the IED-1. Additionally, the process unit 130 and the generic device 135 will also receive the precision time from the IED-1.

Designation of an IED 160 to serve as protection zone master clock may be determined by a Clock Priority Table. The clock priority table can be configured by a user to prioritize an order in which the IEDs 160 would be designated to serve as the protection zone master clock. Specifically, the clock priority table provides ordering among otherwise equivalent clocks from which the protection zone master clock is selected. The IEDs 160 can be ranked on the clock priority table by criteria such as, but not limited to, signal availability of the IED 160, time quality produced IED 160, and physical location of the IED 160.

Using an IED 160 as a temporary protection zone master clock is beneficial because Precision Time Protocol requirements for a clock serving as a temporary master clock when the grandmaster clock is unavailable is greatly reduced. Since the IEDs 160 are in physical proximity (i.e., same zone) with the process unit 130 and/or the device 135, it is convenient to use these devices to serve temporarily as the protection zone master clock while the grandmaster clock 110 is unavailable.

FIG. 2 illustrates the controller 200, which is an adjustable hardware accessed by the networks 120. The controller 200 may be developed through the use of code libraries, static analysis tools, software, hardware, firmware, or the like.

The controller 200 includes a memory 210. The memory 210 may include several categories of software and data used in the controller 200, including, applications 220, a database 230, an operating system (OS) 240, and I/O device drivers 250.

As will be appreciated by those skilled in the art, the OS 240 may be any operating system for use with a data processing system. The I/O device drivers 250 may include various routines accessed through the OS 240 by the applications 220 to communicate with devices and certain memory components.

The applications 220 can be stored in the memory 210 and/or in a firmware (not shown in detail) as executable instructions and can be executed by a processor 260.

The processor 260 could be multiple processors, which could include distributed processors or parallel processors in a single machine or multiple machines. The processor 260 can be used in supporting a virtual processing environment. The processor 260 may be a microcontroller, microprocessor, application specific integrated circuit (ASIC), programmable logic controller (PLC), complex programmable logic device (CPLD), programmable gate array (PGA) including a Field PGA, or the like. References herein to processor executing code or instructions to perform operations, acts, tasks, functions, steps, or the like, could include the processor 260 performing the operations directly and/or facilitating, directing, or cooperating with another device or component to perform the operations.

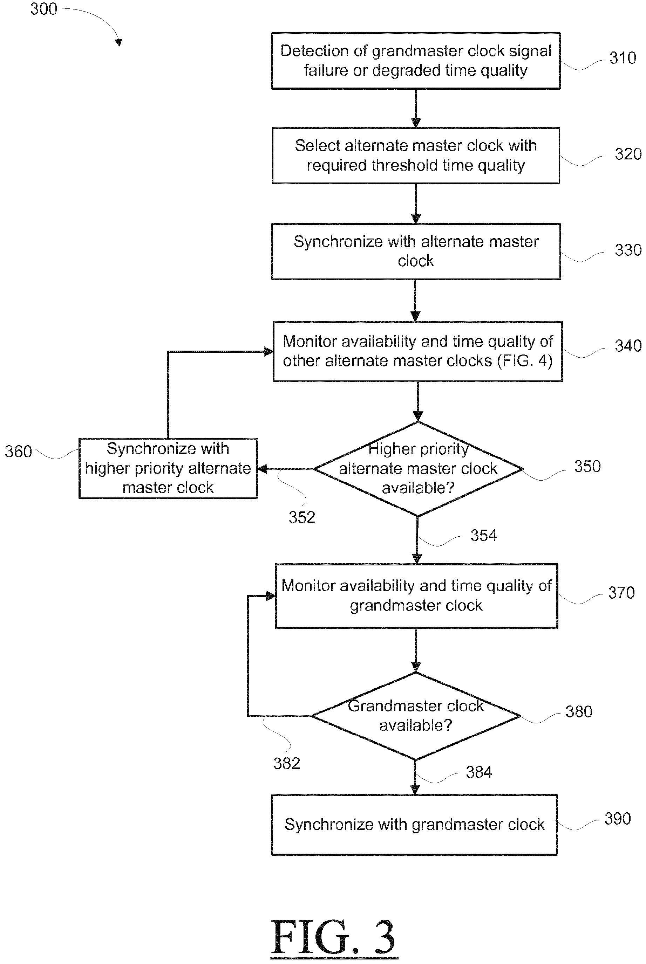

The applications 220 include various programs, such as sequences 300, 400, 500 (shown in FIGs. 3-5) described below that, when executed by the processor 260, process data received by the network 120.

The applications 220 may be applied to data stored in the database 230, along with data, e.g., received via the I/O data ports 270. The database 230 represents the static and dynamic data used by the applications 220, the OS 240, the I/O device drivers 250 and other software programs that may reside in the memory 210.

While the memory 210 is illustrated as residing proximate the processor 260, it should be understood that at least a portion of the memory 210 can be a remotely accessed storage system, for example, a server on a communication network, a remote hard disk drive, a removable storage medium, combinations thereof, and the like. Thus, any of the data, applications, and/or software described above can be stored within the memory 210 and/or accessed via network connections to other data processing systems (not shown) that may include a local area network (LAN), a metropolitan area network (MAN), or a wide area network (WAN), for example.

It should be understood that FIG. 2 and the description above are intended to provide a brief, general description of a suitable environment in which the various aspects of some embodiments of the present disclosure can be implemented. While the description refers to computer-readable instructions, embodiments of the present disclosure can also be implemented in combination with other program modules and/or as a combination of hardware and software in addition to, or instead of, computer readable instructions.

The term "application," or variants thereof, is used expansively herein to include routines, program modules, programs, components, data structures, algorithms, and the like. Applications can be implemented on various system configurations including single-processor or multiprocessor systems, minicomputers, mainframe computers, personal computers, hand-held computing devices, microprocessor-based, programmable consumer electronics, combinations thereof, and the like.

FIGs. 3-5 illustrate exemplary sequences executed by the controller 200. It should be understood that the steps of the methods are not necessarily presented in any particular order and that performance of some or all the steps in an alternative order, including across these figures, is possible and is contemplated. The steps have been presented in the demonstrated order for ease of description and illustration. Steps can be added, omitted and/or performed simultaneously without departing from the scope of the appended claims. It should also be understood that the illustrated method or sub-methods can be ended at any time.

In certain embodiments, some or all steps of this process, and/or substantially equivalent steps are performed by a processor (e.g., computer processor, executing computer-executable instructions), corresponding to one or more corresponding algorithms, and associated supporting data stored or included on a computer-readable medium, such as any of the computer-readable memories described above, including the remote server and vehicles.

FIG. 3 illustrates an exemplary sequence 300 for selecting the protection zone master clock when there is a signal failure or time quality degradation of the grandmaster clock 110.

At 310, the system 100 detect an issue with the grandmaster clock 110. Specifically, one of the networks 120 detect that the grandmaster clock 110 has a time quality degraded from the predetermined threshold or the signal of the grandmaster clock 110 has a failure or is otherwise unavailable.

At 320, when the grandmaster clock 110 has degraded time quality or is otherwise unavailable, the network 120 selects the IED 160 as the protection zone master clock. Where the grandmaster clock 110 is unavailable, one of the IEDs 160 is selected as the protection zone master. Where the grandmaster clock 110 has a time quality that does not meet the predetermined threshold, one of the IED 160 serves as the protection zone master clock where the time quality of the IED 160 meets the predetermined threshold. The IED 160 selected to serve as the protection zone master clock is selected from the clock priority table.

At 330, the process unit 130 and the generic device 135 are synchronized with the protection zone master clock, specifically the IED 160.

In some embodiments, the grandmaster clock 110 is notified that the IED 160 has taken responsibility for communicating the precision time to the process units 130 and other IEDs 160. In such embodiments, the grandmaster clock 110 may continue to send signals to the process units 130 and the IED 160. However, the process units 130 and IED 160 are configured to bypass the data sent by the grandmaster clock 110 when its time quality is degraded.

In some embodiments, the event signal failure is logged/stored to an internal memory within the network 120, the process unit 130, and/or the IED 160. In some embodiments, the process unit 130 and/or the IED 160 are configured to alert (e.g., light or sound) a user of the signal failure.

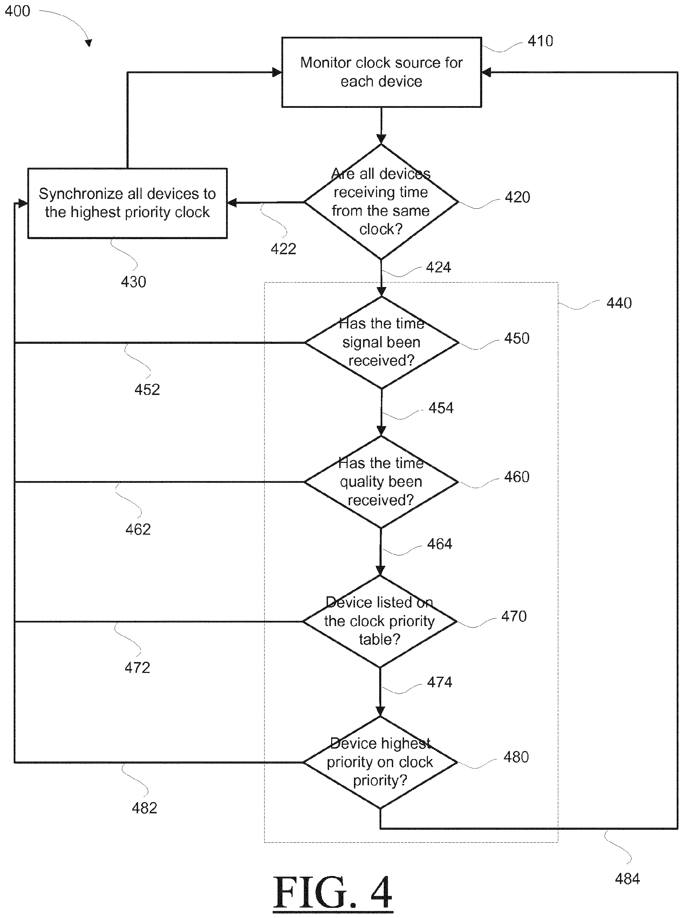

At 340, the networks 120 monitor the availability of other clocks (i.e., IEDs 160). At 230, the networks 120 to determine if an IED 160 having a higher priority than the current protection zone master clock is available to serve as the protection zone master clock. Specifically, if the protection zone master clock needs to change from a first IED 160 to a second IED 160 having a more desirable position on the clock priority table. Further details about monitoring availability of other clocks is described in association with FIG. 4.

At 360, where the second IED 160 has a higher priority than a first IED 160 (e.g., path 352), the second IED 160 will serve as the protection zone master clock. Specifically, the network 120 stops the signals from the connections 152, 154 from the first IED 160 from serving as the as the protection zone master clock and allows the signals from the connections 152, 154 from the second IED 160 to serve as the protection zone master clock. As a result, the first IED 160 becomes a PTP slave and the second IED 160 become a PTP master.

Where the second IED 160 does not have a higher priority than the first IED 160 (e.g., path 354), the first IED 160 will remain the protection zone master clock, and the networks 120 will continue monitoring availability of the protection zone (local) master clocks.

At 370, the network 120 monitors the availability of the grandmaster clock 110. The IED 160 monitors to determine if the signal from the grandmaster clock 110 has been restored or if the time quality received by the grandmaster clock 110 has reached the predetermined threshold.

Where the grandmaster clock 110 is still unavailable or has a time quality that does not meet the predetermined threshold (e.g., path 382), the network 120 continues monitoring for availability of the grandmaster clock 110.

At 390, where the grandmaster clock 110 become available (e.g., path 384), the network 120 synchronizes the process units(s) 130 and IEDs 160 with the grandmaster clock 110. In some embodiments, the grandmaster clock 110 resumes responsibility as the PTP master, when the time quality of the grandmaster clock 110 has improved to meet the predetermined threshold. In some embodiments, the grandmaster clock 110 becomes the PTP master at the expiration of a switch-back delay. The switch-back delay sets a predetermined time period in which the system 100 will automatically being sending the signal provided the grandmaster clock 110.

FIG. 4 illustrates an exemplary sequence 400 for changing from a first clock master (e.g., grandmaster clock 110) to a second clock master (e.g., designated IED 160). The sequence is described from the perspective of a particular device (i.e., IED 160), but can be extrapolated to apply to all devices in physical proximity to another, such as the process unit 130 and the non-designated IEDs 160 in the same physical location.

At 410, the system 100 monitors time signal and time quality messages received from each device, especially the IEDs 160. The system 100 also monitors the clock with which each device is synchronized. Specifically, determining that all devices are synchronized to the same clock (i.e., the grandmaster clock 110 or the IED 160 serving as the protection zone master clock).

At 420, the system 100 determines if the process unit 130, the generic device 135, and the non-designated IEDs 160 are receiving time from the same time source, specifically, are all devices being synchronized to the grandmaster clock 110 or the designated IED 160 serving as the protection zone master clock.

Where all devices are not receiving time from the same time source (i.e., path 422), a pulse signal is sent to all devices for synchronization at step 430. In some embodiments, a pulse signal is sent only to the specific device(s) which need to be synchronized. The pulse signal synchronizes the device(s) to the highest clock within the device that has the highest priority in the clock priority table.

Where all devices are receiving time from the same time source (i.e., path 424), an individual device sequence 440 begins. The sequence 440 is a series of steps that determines if each device (i.e., process unit 130, generic device 135, and IED 160) is properly synchronized with other devices in the same physical location. The sequence 440 monitors specifics of each device such as time quality, which allows the system 100 to synchronize all devices within the same physical location to the best time source available.

At step 450, the system 100 determines if a time signal is received for a particular device at step 450. Monitoring the time signal allows the system 100 to determine which devices (i.e., IEDs 160) are available to serve as the protection zone master clock in the event that the grandmaster clock 110 has a degraded time quality or is unavailable. Where no time signal is received for the particular device (i.e., path 452), the particular device is synchronized with the highest priority clock in the clock priority table at step 430.

Where a time signal has been received for the particular device (i.e., path 454), the system 100 determines if a time quality is received for the particular device at step 460. Monitoring the time quality allows the system 100 to determine which devices (i.e., IEDs 160) have the best time quality when designating the protection zone master clock in the event that the grandmaster clock 110 has a degraded time quality or is unavailable. Where no time signal is received for the particular device (i.e., path 452), the particular device is synchronized with the highest priority clock in the clock priority table at step 430.

Where a time quality has been received for the particular device (i.e., path 464), the system 100 determines if the particular device is listed on the clock priority table at step 470. Presence of the particular device on the clock priority table means that the particular device is available to serve as the protection zone master clock where the grandmaster clock 110 is unavailable. For example, the process unit 130 and the generic device 135 are not listed on the clock priority table, so they are not available to serve as the protection zone master clock. Where the particular device is not listed on the clock priority table (i.e., path 472), that particular device is synchronized with the highest priority clock in the clock priority table at step 430.

Where the particular device is listed on the clock priority table (i.e., path 474), the system 100 determines if the particular device has the highest priority on the clock priority table at step 480. Where the particular device is not the highest priority clock on the clock priority table (i.e., path 482), the particular device is synchronized with the highest priority clock in the clock priority table at step 430. Where the particular device is the highest priority on the clock priority table (i.e., path 484), the particular device is the designated protection zone master clock and all devices (i.e., process unit 130, generic device 135, and non-designated IEDs 160) synchronize with the particular device.

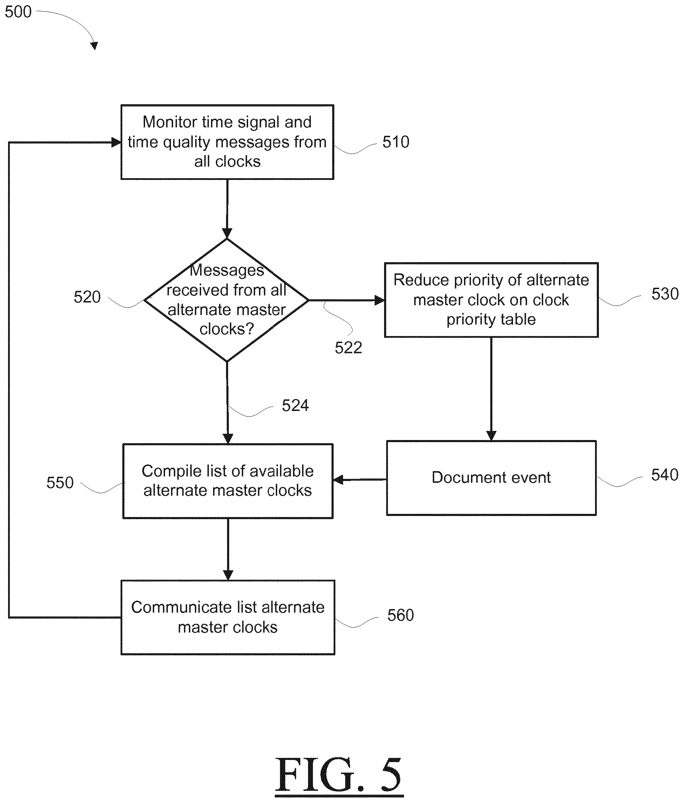

FIG. 5 illustrates an exemplary sequence 500 for updating the clock priority table.

At 510, the networks 120 monitor time signal and time quality messages received from the all clocks housed in the clock priority table, specifically the grandmaster clock 110 and IEDs 160. The time signal and time quality messages are compiled into a list of which IEDs 160 are available to serve as the protection zone master clock when the grandmaster clock 110 has a degraded time quality or otherwise unavailable.

At 520, the networks 120 determine if a time signal and time quality message has been received from all IEDs 160. At 530, where a time signal and time quality message is not received from a specific IED 160 (e.g., path 552), the priority of that IED 160 is reduced on the clock priority table.

At 540, the networks 120 may log or otherwise document (e.g., to a memory) which IEDs 160 did not send a message of availability. In some embodiments, a failure to send the message of availability is logged/stored to an internal memory within the IED 160. In some embodiments, the IED(s) 160 having a signal failure are configured to alert (e.g., light or sound) a user of the signal failure.

At 560, the networks 120 communicate the list of IEDs 160 available to serve as the protection zone master clock to the process unit(s) 130 and the IEDs 160. As such, all devices receive the list of available protection zone master clocks, even if the device is not on the clock priority table, or even if the device has a lower position on the clock priority table. The list of available protection zone master clocks are distributed to devices in physical proximity (i.e., same zone) of one another. As such, during failure or degradation of the grandmaster clock 110 time, the process unit(s) 130 and the IEDs 160 in the same zone will be synchronized to the same precision time, which can prevent an interruption in power to equipment, such as a transformer bank being protected by the IEDs 160.

Those skilled in the relevant art(s) will appreciate that various adaptations and modifications of the embodiments described above can be configured without departing from the scope of the appended claims.

Therefore, it is to be understood that, within the scope of the appended claims, the disclosure may be practiced other than as specifically described herein.

## Claims

1. A system (100) for synchronizing time sources within a protection zone of a digital power substation comprising:
a global time source (110) having a first time signal and a first time quality;
a processing communication network (120) comprising a plurality of switches, each in communication with the global time source (110);
an electronic device (160) configured to control an equipment within the protection zone, the electronic device (160) comprising a protection zone master clock having a second time signal and a second time quality, the protection zone master clock in communication with the processing communication network (120) and configured to receive data packets from the global time source (110); and
a process unit (130) comprising a time source configured to receive and process data packets comprising the first time signal and first time quality and data packets comprising the second time signal and second time quality,
**characterised in that** the time source of the process unit (130) is configured to:
synchronize with the protection zone master clock where the first time signal is unavailable; and
synchronize with the protection zone master clock where the first time quality of the global time source (110) is degraded below a predetermined threshold.

2. The system of claim 1, wherein the predetermined threshold is the second time quality of the protection zone master clock.

3. The system of claim 1 or 2, wherein the electronic device further comprises at least one digital protection relay port to receive the data packets from the global time source (110) and communicate data packets the process unit (130).

4. The system of any of claims 1 to 3, wherein the electronic device (160) is one of a plurality of electronic devices, each electronic device having a protection zone master clock producing a time signal and a quality and each electronic device (160) having a ranking on a predetermined clock priority table.

5. The system of claim 4, wherein the clock priority table is configured to rank the plurality of the electronic devices (160) by the time signal and time quality of each protection zone master clock.

6. The system of claim 4 or 5, wherein the time source of the process unit (130) is further configured to synchronize with the protection zone master clock from one electronic device (160) of the plurality of electronic devices that has a higher ranking on the clock priority table when compared to another electronic device (160) of the plurality of electronic devices on the clock priority table.

7. The system of any of claims 1 to 6, wherein the processing communication network (120) is a first processing communication network having a first plurality of switches, the first processing communication network configured to be in communication with a second processing communication network comprising a second plurality of switches each synchronized to the global time source (110).

8. A method for synchronizing time sources within a protection zone of a digital power substation, comprising:
receiving, by a process unit (130) having a time source, a first data set comprising a first time signal and a first time quality from a global time source (110) in communication with a processing communication network (120) comprising a plurality of switches;
receiving, by the process unit (130), a second data set comprising a second time signal and a second time quality from an electronic device (160) configured to control an equipment within the protection zone, the electronic device comprising an protection zone master clock in communication with the processing communication network (120);
the method being **characterised by** further comprising:
determining, by the process unit (130), that the first time quality does not meet a predetermined threshold or that the first time signal is unavailable; and
updating, by the process unit (130), the time source of the process unit (130) to the second time signal.

9. The method of claim 8, wherein the predetermined threshold is the second time quality of the protection zone master clock.

10. The method of claim 8 or 9, further comprising receiving, by the process unit (130), a third data set comprising a third time signal and third time quality from the global time source (110) where the predetermined threshold is met.

11. The method of any of claims 8 to 10, wherein the electronic device (160) further comprises at least one digital protection relay port to receive data packets from the global time source (110) and communicate data packets the process unit (130).

12. The method of any of claims 8 to 11, wherein the electronic device (160) is one of a plurality of electronic devices, each electronic device having a protection zone master clock producing a time signal and a quality and each electronic device (160) having a ranking on a predetermined clock priority table.

13. The method of claim 12, wherein the clock priority table ranks the plurality of the electronic devices (160) by the time signal and time quality of each protection zone master clock.

14. The method of claim 12 or 13, wherein the time source of the process unit (130) synchronizes with the protection zone master clock from one electronic device (160) of the plurality of electronic devices that has a higher ranking on the clock priority table when compared to another electronic device (160) of the plurality of electronic devices on the clock priority table.

## Patentansprüche

1. System (100) zur Synchronisierung von Zeitquellen innerhalb einer Schutzzone eines digitalen Umspannwerks, umfassend:
eine globale Zeitquelle (110), die ein erstes Zeitsignal und eine erste Zeitqualität aufweist;
ein Verarbeitungskommunikationsnetzwerk (120), das eine Vielzahl von Schaltern umfasst, die jeweils mit der globalen Zeitquelle (110) in Verbindung stehen;
eine elektronische Vorrichtung (160), die konfiguriert ist, um eine Ausrüstung innerhalb der Schutzzone zu steuern, wobei die elektronische Vorrichtung (160) eine Schutzzonenhauptuhr umfasst, die ein zweites Zeitsignal und eine zweite Zeitqualität aufweist, wobei die Schutzzonenhauptuhr in Verbindung mit dem Verarbeitungskommunikationsnetzwerk (120) steht und konfiguriert ist, um Datenpakete von der globalen Zeitquelle (110) zu empfangen; und
eine Prozesseinheit (130), die eine Zeitquelle umfasst, die zum Empfangen und Verarbeiten von Datenpaketen, die das erste Zeitsignal und die erste Zeitqualität umfassen, und von Datenpaketen, die das zweite Zeitsignal und die zweite Zeitqualität umfassen, konfiguriert ist,
**dadurch gekennzeichnet, dass** die Zeitquelle der Prozesseinheit (130) konfiguriert ist zum:
Synchronisieren mit der Schutzzonenhauptuhr, wobei das erste Zeitsignal nicht verfügbar ist; und
Synchronisieren mit der Schutzzonenhauptuhr, wobei die erste Zeitqualität der globalen Zeitquelle (110) unter eine vorbestimmte Schwelle herabgesetzt wird.

2. System nach Anspruch 1, wobei die vorbestimmte Schwelle die zweite Zeitqualität der Schutzzonenhauptuhr ist.

3. System nach Anspruch 1 oder 2, wobei die elektronische Vorrichtung weiter mindestens einen digitalen Schutzrelaisanschluss umfasst, um die Datenpakete von der globalen Zeitquelle (110) zu empfangen und Datenpakete an die Prozesseinheit (130) zu kommunizieren.

4. System nach einem der Ansprüche 1 bis 3, wobei die elektronische Vorrichtung (160) eine aus einer Vielzahl von elektronischen Vorrichtungen ist, wobei jede elektronische Vorrichtung eine Schutzzonenhauptuhr aufweist, die ein Zeitsignal und eine Qualität erzeugt, und wobei jede elektronische Vorrichtung (160) eine Rangfolge auf einer vorbestimmten Uhrenprioritätstabelle aufweist.

5. System nach Anspruch 4, wobei die Uhrenprioritätstabelle konfiguriert ist, um die Vielzahl der elektronischen Vorrichtungen (160) nach dem Zeitsignal und der Zeitqualität jeder Schutzzonenhauptuhr zu ordnen.

6. System nach Anspruch 4 oder 5, wobei die Zeitquelle der Prozesseinheit (130) weiter konfiguriert ist, um sich mit der Schutzzonenhauptuhr von einer elektronischen Vorrichtung (160) der Vielzahl von elektronischen Vorrichtungen zu synchronisieren, die im Vergleich zu einer anderen elektronischen Vorrichtung (160) der Vielzahl von elektronischen Vorrichtungen auf der Uhrenprioritätstabelle einen höheren Rang aufweist.

7. System nach einem der Ansprüche 1 bis 6, wobei das Verarbeitungskommunikationsnetzwerk (120) ein erstes Verarbeitungskommunikationsnetzwerk ist, das eine erste Vielzahl von Schaltern aufweist, wobei das erste Verarbeitungskommunikationsnetzwerk konfiguriert ist, um in Verbindung mit einem zweiten Verarbeitungskommunikationsnetzwerk zu stehen, das eine zweite Vielzahl von Schaltern umfasst, die jeweils mit der globalen Zeitquelle (110) synchronisiert sind.

8. Verfahren zur Synchronisierung von Zeitquellen innerhalb einer Schutzzone eines digitalen Umspannwerks, Folgendes umfassend:
Empfangen, durch eine Prozesseinheit (130), die eine Zeitquelle aufweist, eines ersten Datensatzes, der ein erstes Zeitsignal und eine erste Zeitqualität umfasst, von einer globalen Zeitquelle (110) in Verbindung mit einem Verarbeitungskommunikationsnetzwerk (120), das eine Vielzahl von Schaltern umfasst;
Empfangen, durch die Prozesseinheit (130), eines zweiten Datensatzes, der ein zweites Zeitsignal und eine zweite Zeitqualität umfasst, von einer elektronischen Vorrichtung (160), die konfiguriert ist, um eine Ausrüstung innerhalb der Schutzzone zu steuern, wobei die elektronische Vorrichtung eine Schutzzonenhauptuhr in Verbindung mit dem Verarbeitungskommunikationsnetzwerk (120) umfasst;
wobei das Verfahren **dadurch gekennzeichnet ist, dass** es weiter umfasst:
Bestimmen, durch die Prozesseinheit (130), dass die erste Zeitqualität eine vorbestimmte Schwelle nicht erfüllt oder dass das erste Zeitsignal nicht verfügbar ist; und
Aktualisieren, durch die Prozesseinheit (130), der Zeitquelle der Prozesseinheit (130) auf das zweite Zeitsignal.

9. Verfahren nach Anspruch 8, wobei die vorbestimmte Schwelle die zweite Zeitqualität der Schutzzonenhauptuhr ist.

10. Verfahren nach Anspruch 8 oder 9, weiter umfassend das Empfangen, durch die Prozesseinheit (130), eines dritten Datensatzes, der ein drittes Zeitsignal und eine dritte Zeitqualität von der globalen Zeitquelle (110) umfasst, wobei die vorbestimmte Schwelle erfüllt ist.

11. Verfahren nach einem der Ansprüche 8 bis 10, wobei die elektronische Vorrichtung (160) weiter mindestens einen digitalen Schutzrelaisanschluss umfasst, um Datenpakete von der globalen Zeitquelle (110) zu empfangen und Datenpakete der Prozesseinheit (130) zu kommunizieren.

12. Verfahren nach einem der Ansprüche 8 bis 11, wobei die elektronische Vorrichtung (160) eine aus einer Vielzahl von elektronischen Vorrichtungen ist, wobei jede elektronische Vorrichtung eine Schutzzonenhauptuhr aufweist, die ein Zeitsignal und eine Qualität erzeugt, und wobei jede elektronische Vorrichtung (160) eine Rangfolge auf einer vorbestimmten Uhrenprioritätstabelle aufweist.

13. Verfahren nach Anspruch 12, wobei die Uhrenprioritätstabelle die Vielzahl der elektronischen Vorrichtungen (160) nach dem Zeitsignal und der Zeitqualität jeder Schutzzonenhauptuhr ordnet.

14. Verfahren nach Anspruch 12 oder 13, wobei die Zeitquelle der Prozesseinheit (130) mit der Schutzzonenhauptuhr von einer elektronischen Vorrichtung (160) aus der Vielzahl von elektronischen Vorrichtungen synchronisiert wird, die im Vergleich zu einer anderen elektronischen Vorrichtung (160) aus der Vielzahl von elektronischen Vorrichtungen in der Uhrenprioritätstabelle einen höheren Rang aufweist.

## Revendications

1. Système (100) pour synchroniser des sources temporelles à l'intérieur d'une zone de protection d'une sous-station électrique numérique comprenant :
une source temporelle mondiale (110) présentant un premier signal temporel et une première qualité temporelle ;
un réseau de communication de traitement (120) comprenant une pluralité de commutateurs, chacun en communication avec la source temporelle mondiale (110) ;
un dispositif électronique (160) configuré pour commander un équipement à l'intérieur de la zone de protection, le dispositif électronique (160) comprenant une horloge maîtresse de zone de protection présentant un deuxième signal temporel et une deuxième qualité temporelle, l'horloge maîtresse de zone de protection étant en communication avec le réseau de communication de traitement (120) et configurée pour recevoir des paquets de données à partir de la source temporelle mondiale (110) ; et
une unité de traitement (130) comprenant une source temporelle configurée pour recevoir et traiter des paquets de données comprenant le premier signal temporel et la première qualité temporelle et des paquets de données comprenant le deuxième signal temporel et la deuxième qualité temporelle,
**caractérisé en ce que** la source temporelle de l'unité de traitement (130) est configurée pour :
se synchroniser avec l'horloge maîtresse de zone de protection lorsque le premier signal temporel est indisponible ; et
se synchroniser avec l'horloge maîtresse de zone de protection lorsque la première qualité temporelle de la source temporelle mondiale (110) s'est dégradée en dessous d'un seuil prédéterminé.

2. Système selon la revendication 1, dans lequel le seuil prédéterminé est la deuxième qualité temporelle de l'horloge maîtresse de zone de protection.

3. Système selon la revendication 1 ou 2, dans lequel le dispositif électronique comprend en outre au moins un port de relais de protection numérique pour recevoir les paquets de données à partir de la source temporelle mondiale (110) et communiquer des paquets de données à l'unité de traitement (130).

4. Système selon l'une quelconque des revendications 1 à 3, dans lequel le dispositif électronique (160) est l'un d'une pluralité de dispositifs électroniques, chaque dispositif électronique présentant une horloge maîtresse de zone de protection produisant un signal temporel et une qualité et chaque dispositif électronique (160) présentant un classement sur une table de priorité d'horloge prédéterminée.

5. Système selon la revendication 4, dans lequel la table de priorité d'horloge est configurée pour classer la pluralité des dispositifs électroniques (160) selon le signal temporel et la qualité temporelle de chaque horloge maîtresse de zone de protection.

6. Système selon la revendication 4 ou 5, dans lequel la source temporelle de l'unité de traitement (130) est en outre configurée pour se synchroniser avec l'horloge maîtresse de zone de protection d'un dispositif électronique (160) de la pluralité de dispositifs électroniques qui présente un classement plus élevé sur la table de priorité d'horloge lorsqu'il est comparé à un autre dispositif électronique (160) de la pluralité de dispositifs électroniques sur la table de priorité d'horloge.

7. Système selon l'une quelconque des revendications 1 à 6, dans lequel le réseau de communication de traitement (120) est un premier réseau de communication de traitement présentant une première pluralité de commutateurs, le premier réseau de communication de traitement étant configuré pour être en communication avec un second réseau de communication de traitement comprenant une seconde pluralité de commutateurs chacun synchronisé avec la source temporelle mondiale (110).

8. Procédé pour synchroniser des sources temporelles à l'intérieur d'une zone de protection d'une sous-station électrique numérique, comprenant :
la réception, par une unité de traitement (130) présentant une source temporelle, d'un premier jeu de données comprenant un premier signal temporel et une première qualité temporelle provenant d'une source temporelle mondiale (110) en communication avec un réseau de communication de traitement (120) comprenant une pluralité de commutateurs ;
la réception, par l'unité de traitement (130), d'un deuxième jeu de données comprenant un deuxième signal temporel et une deuxième qualité temporelle provenant d'un dispositif électronique (160) configuré pour commander un équipement à l'intérieur de la zone de protection, le dispositif électronique comprenant une horloge maîtresse de zone de protection en communication avec le réseau de communication de traitement (120) ;
le procédé étant **caractérisé en ce qu'**il comprend en outre :
la détermination, par l'unité de traitement (130), que la première qualité temporelle ne respecte pas un seuil prédéterminé ou que le premier signal temporel est indisponible ; et
la mise à jour, par l'unité de traitement (130), de la source temporelle de l'unité de traitement (130) au deuxième signal temporel.

9. Procédé selon la revendication 8, dans lequel le seuil prédéterminé est la deuxième qualité temporelle de l'horloge maîtresse de zone de protection.

10. Procédé selon la revendication 8 ou 9, comprenant en outre la réception, par l'unité de traitement (130), d'un troisième jeu de données, comprenant un troisième signal temporel et une troisième qualité temporelle, à partir de la source temporelle mondiale (110) lorsque le seuil prédéterminé est respecté.

11. Procédé selon l'une quelconque des revendications 8 à 10, dans lequel le dispositif électronique (160) comprend en outre au moins un port de relais de protection numérique pour recevoir des paquets de données à partir de la source temporelle mondiale (110) et communiquer des paquets de données à l'unité de traitement (130).

12. Procédé selon l'une quelconque des revendications 8 à 11, dans lequel le dispositif électronique (160) est l'un d'une pluralité de dispositifs électroniques, chaque dispositif électronique présentant une horloge maîtresse de zone de protection produisant un signal temporel et une qualité et chaque dispositif électronique (160) présentant un classement sur une table de priorité d'horloge prédéterminée.

13. Procédé selon la revendication 12, dans lequel la table de priorité d'horloge classe la pluralité des dispositifs électroniques (160) selon le signal temporel et la qualité temporelle de chaque horloge maîtresse de zone de protection.

14. Procédé selon la revendication 12 ou 13, dans lequel la source temporelle de l'unité de traitement (130) se synchronise avec l'horloge maîtresse de zone de protection d'un dispositif électronique (160) de la pluralité de dispositifs électroniques qui présente un classement plus élevé sur la table de priorité d'horloge lorsqu'il est comparé à un autre dispositif électronique (160) de la pluralité de dispositifs électroniques sur la table de priorité d'horloge.
